# EUROPEAN PATENT APPLICATION

(11) **EP 4 485 286 A1**
(43) Date of publication of application: **01.01.2025**
(21) Application number: 24177564.2
(22) Date of filing: 23.05.2024
(51) Int. Cl.: G06N 3/098, G06N 3/045, G06F 3/01, G02B 27/01, G06N 3/09

(54) **FEDERATED LEARNING FOR SMART HEAD-WORN DEVICES**

(30) Priority: 27.06.2023 EP 23306034
(71) Applicant: Essilor International, 94220 Charenton-Le-Pont (FR)
(72) Inventor: LE CAIN, Aurélie, 94220 CHARENTON-LE-PONT (FR); SAHLER, Jean, 94220 CHARENTON-LE-PONT (FR)
(74) Representative: Plasseraud IP

(57) **Abstract**

The disclosure relates to a communication system for a head-worn device having an active function, comprising:
- an interface capable of transmitting and receiving signals between a local neural network and a global neural network,
wherein:
- the local neural network enables control of the active function using information gathered by an input module and related to a wearer of the head-worn device or his surrounding environment,
- the transmitted and received signals facilitate participation of the local neural network in a federated learning process with the global neural network.

## Description

### DOMAIN

The present invention generally relates to smart head-worn devices and, more particularly, to a communication system, to a head-worn device, to a method for controlling a head-worn device and to a corresponding non-transitory computer-readable storage medium.

### BACKGROUND

Smart eyewear has evolved to include various active functions designed to enhance wearer comfort, visual acuity, and usability. These active functions can be personalized based on wearer's interactions and preferences, providing a unique, customized user experience. To achieve this, the eyewear often requires substantial data collection, processing, and storage capabilities, which can pose challenges given the resource constraints inherent in wearable devices.

Typically, to enhance the active functions, data from the eyewear is transferred to a smartphone, and then further to a cloud server for processing. The processed data, often in the form of an updated algorithm or model, is then sent back to the eyewear. This approach, however, has several limitations. It requires substantial energy and memory resources, not only for the eyewear and smartphone but also for cloud storage and processing. Moreover, bandwidth limitations can pose challenges for transferring raw data to the cloud, and concerns over data privacy arise from the need to store raw data in the cloud.

Some alternative approaches have been proposed, such as processing all data directly on the smartphone, which can mitigate some issues relating to bandwidth and data privacy. However, these approaches have their own limitations. They still require significant local data storage, and they lack the ability to generalize the algorithm or model across multiple users, which can limit the functionality and adaptability of the eyewear.

Therefore, a need exists for a system and method that can effectively control the active functions of smart eyewear based on wearer interactions and preferences, while overcoming the limitations of the current approaches.

### SUMMARY

The invention is defined by the appended independent claims. Additional features and advantages of the concepts herein disclosed are set forth in the description which follows.

The present disclosure aims at improving the situation.

In particular, the distinct aspects outlined in this disclosure collectively contribute to effectively managing one or more active functionalities of a smart head-worn device based on wearer interactions and/or preferences, thereby addressing the drawbacks associated with conventional approaches. Each of these aspects plays a key role in the personalization of active functions tailored to the wearer, while further offering a capacity for generalization across a population of wearers. Moreover, these aspects help to minimize the necessary energy, memory, and data storage resources, reducing the demand for extensive raw data transfers. Importantly, the implementation of these aspects effectively addresses concerns over data privacy.

To this end, the present disclosure describes a communication system for a head-worn device having an active function, comprising:
- an interface capable of transmitting and receiving signals between a local neural network and a global neural network,
wherein:
- the local neural network enables control of the active function using information gathered by an input module and related to a wearer of the head-worn device or his surrounding environment,
- the transmitted and received signals facilitate participation of the local neural network in a federated learning process with the global neural network.

The information gathered by the input module ensure a comprehensive understanding of the wearer's needs and preferences.

The local neural network enables precise control of the active function of the head-worn device. By utilizing the information gathered by the input module, the local neural network allows optimizing the functionality of the head-worn device according to the wearer's needs and preferences. Additionally, the local neural network may leverage the information gathered by the input module to proactively anticipate the wearer's needs. For example, the local neural network may dynamically optimize the tint intensity based on changing lighting conditions or proactively adjust the optical power to alleviate visual strain.

As wearers with similar use cases and preferences contribute to the global network, the collective intelligence accumulated by the federated learning process can be leveraged to refine the active function of the head-worn device and provide tailored solutions for specific scenarios. Whether it's adapting to new lighting environments, optimizing for different visual tasks, or addressing specific wearer requirements, the ability to learn and evolve through federated learning ensures the relevance and effectiveness of the communication system in diverse situations.

Optionally, a signal from the local neural network encapsulates a set of N local weights, N>1, representing a relationship between training data and their respective labels, wherein the training data are information gathered by the input module and the labels correspond to various states of the active function.

In some cases, specific wearer characteristics or preferences may be derived from the training data gathered by the input module and may be reflected by the set of local weights. For this reason, the utilization of the local weights may enable a personalized control of the active function, allowing for a more customized and tailored user experience.

Further, as indicated, the set of local weights represents the relationship between training data and their respective labels. Therefore, by encapsulating this relationship in a single signal, the communication system optimizes communication efficiency and reduces overall data transmission requirements.

Optionally, a signal from the global neural network encapsulates M global weights, N>M≥1, and each received global weight is utilized to replace a corresponding weight of the set of local weights.

In this weight replacement mechanism, since the number M of global weights encapsulated in the signal from the global neural network is less than the number N of local weights, only a subset of local weights are replaced, leaving others intact. This selective replacement offers significant advantages. For instance, it allows the head-worn device to retain local weights that reflect personalized wearer preferences or unique characteristics that are not common or necessary on a global scale. Consequently, it helps to maintain the personalized user experience offered by the device, while integrating enhancements learned from the global network. Moreover, this mechanism allows for gradual adoption of global improvements, providing a smoother transition from locally learned behavior to globally learned behavior. This can be particularly useful in eyewear applications where sudden changes in the active function, like automatic adjustment of optical power or tint intensity, may cause discomfort or confusion for the wearer.

The present disclosure also describes a head-worn device having an active function and comprising:
- an input module configured to gather information related to a wearer of the head-worn device or their surrounding environment,
- a local neural network enabling control of the active function using the information gathered by the input module, and
- an interface capable of transmitting and receiving signals between the local neural network and a global neural network,
wherein the transmitted and received signals facilitate participation of the local neural network in a federated learning process with the global neural network.

Optionally, the input module comprises a human-machine interface adapted to receive wearer inputs from the wearer of the head-worn device.

The human-machine interface allows the wearer to provide inputs directly, enabling intuitive and user-friendly control of the head-worn device. This enhances the overall user experience and simplifies the interaction between the wearer and the device.

The inputs may include wearer-specific data such as age, gender, laterality, preferences related to transmission intensity, optical power adjustment levels, or desired defocus settings. In some instances, the inputs may also enable the wearer to voluntarily control the active function. This voluntary modification of the active function by the wearer can be interpreted as a means of expressing their satisfaction or dissatisfaction. By analyzing such inputs, the local neural network can fine-tune the active function to provide a personalized and optimized visual experience. This level of customization ensures that the device adapts to the wearer's unique characteristics and visual requirements, leading to increased wearer satisfaction and comfort.

Optionally, the input module comprises a sensing module adapted to sense:
- environment data, for instance in a list comprising one or more of the following: luminosity data, distance data and frame boxing data, and/or
- wearer data, for instance in a list comprising one or more of the following: activity data, sensitivity data, laterality data, and posture data.

Posture data may refer to head orientation data.

For example, by collecting wearer-specific data such as activity levels, the device can dynamically adjust its active function to provide optimal performance during different activities. Whether the wearer is engaged in sports, working at a computer, or simply relaxing, the head-worn device can adapt its functionality to enhance visual comfort and support the wearer's specific needs in each situation.

Moreover, by gathering environmental data such as luminosity or distance, the head-worn device can intelligently optimize its active function to provide the best visual experience in various environments. This ensures that wearers receive optimal visual clarity and comfort in situations with bright lighting or varying distances.

Optionally, the head-worn device comprises an optical lens and the active function is an optical function of the optical lens.

Optionally, the optical function is a transmission function, an optical power function or a defocus function. The transmission function may be a tint function.

By incorporating an optical lens as part of the head-worn device, the active function becomes directly related to the optical properties of the lens. This integration allows for precise control and optimization of the optical function, enhancing the wearer's visual experience. Whether it's adjusting tint intensity for different lighting conditions, modifying optical power for personalized visual correction, or enabling defocus functionality for specific tasks, the device becomes a comprehensive solution for addressing various optical needs.

Optionally, the head-worn device comprises a screen and the active function is a function of the screen. The screen may be a light field display. The function of the screen may be to magnify some features displayed on the screen such as a font, a luminosity or a color... The function of the screen may be also to move a displayed picture within the headset, such as seen in various types of head-worn devices implementing augmented reality, virtual reality, mixed reality or extended reality technologies.

The present disclosure also describes a method for controlling a head-worn device having an active function, the method comprising:
- gathering information related to a wearer of the head-worn device or their surrounding environment using an input module,
   enabling control of the active function using a local neural network and the gathered information, and
- transmitting and receiving signals between the local neural network and a global neural network through an interface, wherein the transmitted and received signals facilitate participation of the local neural network in a federated learning process with the global neural network.

The present disclosure also describes a computer-readable storage medium, optionally a non-transitory computer-readable storage medium, having stored thereon a computer program comprising instructions which, when executed by a processor, cause the processor to carry out the method hereby described.

The storage medium may include hard drives, solid-state drives, CDs, USB drives, etc. In this context, it is being used to refer to whatever medium is storing the computer program that runs the method.

The present disclosure also describes a computer program comprising instructions that are accessible to a processor and which, when executed by the processor, cause the processor to carry out the method hereby described.

The present disclosure also describes a device equipped with a processor operably connected to a memory and to a communication interface, the device being configured to carry out any of the methods hereby described.

The present disclosure also describes a communication interface configured for transmitting and receiving signals between a local neural network module and a global neural network module,
wherein:
- the local neural network module is capable of generating or refining a personalized model for a wearer of a head-worn device, wherein the head-worn device comprises an optical lens having an optical function which is an active function,
- the personalized model enables control of the active function using information gathered by an input module and related to the wearer of the head-worn device or his surrounding environment,
- the transmitted and received signals facilitate participation of the local neural network module in a federated learning process with the global neural network module, wherein said participation offers a capacity for a generalization of the personalized model across a population of wearers.

Optionally, a signal from the local neural network module encapsulates a set of N local weights, N>1, representing a relationship between training data and their respective labels, wherein the training data are information gathered by the input module and the labels correspond to various states of the active function.

Optionally, a signal from the global neural network module encapsulates M global weights, N>M≥1, and each received global weight is utilized to replace a corresponding weight of the set of local weights.

Optionally, the federated learning process is a personalized federated learning process defined by:
- the global neural network module having access to wearer data indicating that the wearer of the head-worn device belongs to a specific group of wearers, and
- a signal from the global neural network module to the local neural network module being tailored to the specific group of wearers and, optionally, not comprising any information related to a group identity of the specific group of wearers.

The present disclosure also describes a head-worn device comprising an optical lens having an optical function which is an active function, the head-worn device comprising:
- an input module configured to gather information related to a wearer of the head-worn device or their surrounding environment,
- a local neural network module capable of generating or refining a personalized model for the wearer,
- the personalized model enabling control of the active function using the information gathered by the input module, and
- an interface configured for transmitting and receiving signals between the local neural network module and a global neural network module,
wherein the transmitted and received signals facilitate participation of the local neural network module in a federated learning process with the global neural network module, wherein said participation offers a capacity for a generalization of the personalized model across a population of wearers.

Optionally, the input module comprises a human-machine interface adapted to receive wearer inputs from the wearer of the head-worn device.

Optionally, the input module comprises a sensing module adapted to sense:
- environment data, for instance in a list comprising one or more of the following: luminosity data, distance data and frame boxing data, and/or
- wearer data, for instance in a list comprising one or more of the following: activity data, sensitivity data, laterality data, and posture data.

Optionally, the optical function is a transmission function, an optical power function or a defocus function.

The present disclosure also describes a computer-implemented method for controlling a head-worn device comprising an optical lens having an optical function which is an active function, the method comprising:
- gathering information related to a wearer of the head-worn device or their surrounding environment using an input module,
- enabling control of the active function using a personalized model generated or refined for the wearer by a local neural network module (120) and the gathered information, and
- transmitting and receiving signals between the local neural network module and a global neural network module (130) through an interface (124, 132), wherein the transmitted and received signals facilitate participation of the local neural network module in a federated learning process with the global neural network module, wherein said participation offers a capacity for a generalization of the personalized model across a population of wearers.

The present disclosure also describes a non-transitory computer-readable storage medium having stored thereon a computer program comprising instructions which, when executed by a processor, cause the processor to carry out the above computer-implemented method.

### BRIEF DESCRIPTION OF THE DRAWINGS

Figure 1 depicts a general overview of a system adapted to control an active function of a head-worn device, in an exemplary embodiment.
Figure 2 depicts a general structure of an artificial neural network, in an exemplary embodiment.
Figure 3 depicts a communication scheme between the elements represented on Figure 1, in an exemplary embodiment.

### DETAILED DESCRIPTION

The present disclosure is focused on methods and systems that contribute in enabling adaptive, intelligent control of active functions in head-worn devices through personalized machine learning models. The main elements disclosed therein relate to a head-worn device, a controller, an input module, local and global neural networks and communication interfaces between the two networks.

The input module collects relevant data from the wearer's interactions and environment, while the local neural network employs this data to build a local model and generate instructions for the controller to control one or more active functions of the device.

The local network participates in a federated learning process with the global neural network, allowing both neural networks to refine and update their respective models. Federated learning is a machine learning approach where a model is trained across multiple decentralized devices or servers holding local data samples, without exchanging them. This approach maintains data privacy and reduces the need for data centralization.

One of the significant advantages of this approach is its capacity for personalization. By leveraging machine learning, active functions of head-worn devices can be adapted to the specific needs and preferences of individual wearers. Further, through the federated learning process, improvements to the model can benefit all users without compromising their personal data, as only model updates, also called weights, are shared, rather than raw data.

The elements of the present disclosure have broad applicability to various types of head-worn devices. For example, they can be used to automatically adjust the tint of eyewear based on lighting conditions, fine-tune the focus for near vision tasks, or manage myopia control in children's eyewear. Thus, the present disclosure has the potential to greatly enhance user experience across a range of applications in the wearable technology sector.

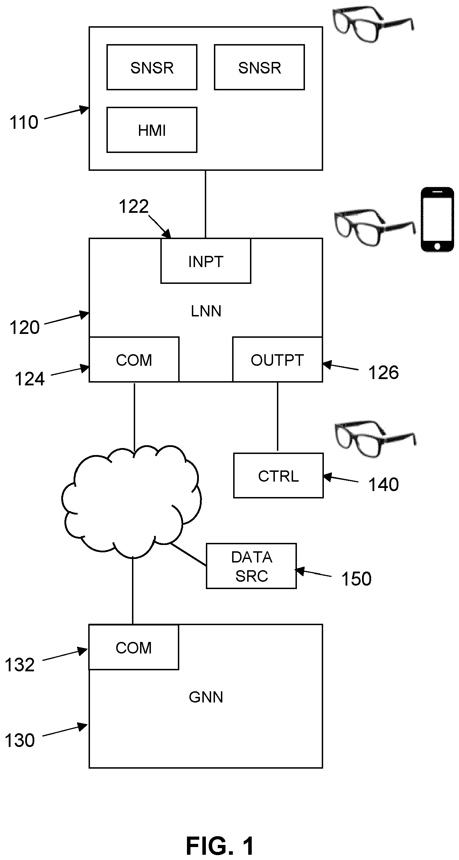

Reference is made to Figure 1 which provides a general overview of a system designed to control an active function of a head-worn device, in an exemplary embodiment.

The head-worn device may be any device that is worn on the head. In the context of the present disclosure, this could include but not be limited to, eyeglasses, headsets, helmets, virtual reality devices, augmented reality devices, and so on. The head-worn device may comprise one or more optical lenses. An optical lens is a piece of transparent substance with curved sides for concentrating or dispersing light.

The active function may be any dynamically modifiable aspect of the head-worn device. This could include an optical function such as adjusting the tint or focus of eyeglasses, the volume or sound balance of a headset, or the display settings of a VR or AR device, to name just a few examples.

The system comprises an input module (110) which may include various input sources, such as sensors or human machine interfaces.

A sensor, or sensing module, is a device or part of a device that is able to detect and respond to some type of input from the physical environment. In the context of the present disclosure, the sensors may include ambient light sensors for light condition analysis, proximity sensors for nearby object detection, accelerometers to measure direction and speed of head movement, eye trackers, in particular infrared eye trackers, to identify gazing direction, time of flight sensors to sense gazing distance, cameras to capture images of the wearer or of the environment, etc.

A human machine interface is a device or software that allows humans to interact with machines. In the context of the present disclosure, human machine interfaces may be adapted to receive for instance tactile inputs or auditory inputs such as voice commands. Other examples of suitable human machine interfaces include gesture recognition systems and graphical user interfaces on connected devices. Some human-machine interfaces may allow, for instance, providing declarative data about the wearer, such as their age, gender, laterality, facial features, prescription, etc. or retrieving compiled data on the frame of the head-worn device, termed "frame boxing data", all of which may be provided as inputs to the system.

Some of the input sources listed above may be incorporated into the head-worn device while others may be provided on connected devices for user input.

The system further comprises a local neural network module (120) with an input interface (122) designed to accommodate the diverse range of inputs from the input module. It also has an output interface (126) responsible for sending instructions to a controller (140) that manages one or more active functions of the head-worn device. The local network module can take various forms, such as a dedicated processing circuit built directly into the head-worn device or even integrated into another device used by the wearer, like a smartphone or a tablet.

In addition, the system features a global neural network module (130) which may communicate via a communication link with the local neural network module. This communication link is symbolically represented by a pair of communication interfaces (124, 132). The global neural network module may be hosted in a remote server or as an application in a cloud-based environment. It may be configured to communicate with other data sources (150), like other local neural networks, cloud databases storing anonymized data from multiple wearers or external APIs providing real-time data on weather.

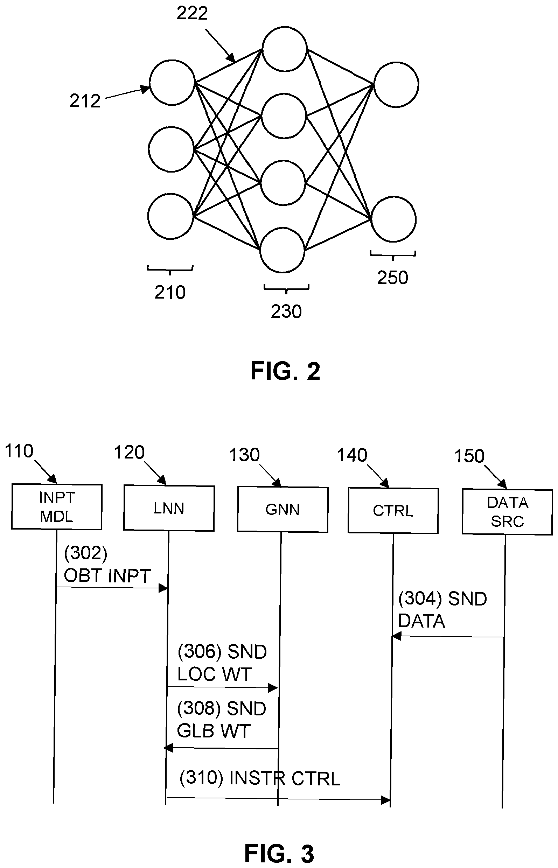

Reference is now made to Figure 2 which provides a general structure of an artificial neural network, in an exemplary embodiment. This general structure is applicable both to the local neural network and to the global neural network. It is a simplified representation, aiming to convey the key elements of the network structure, rather than an accurate depiction of the network's complexity in real-world applications.

The illustrated artificial neural network comprises multiple layers of neurons. At the ends, there's an input layer (210) and an output layer (250), with one or more hidden layers (230) sandwiched between them. Each of these layers hosts several neurons (212), interconnected with every neuron in the adjacent layer. These interconnections are referred to as "weights".

An artificial neural network is generally used to create and adjust models. A training phase involves providing labelled training data as inputs to the input layer. In machine learning, the "training data" refers to the raw data that the model learns from, and the "labels" refer to the corresponding outcomes or classes that the model is trained to "predict". The weights are numerical parameters in the neural network that are adjusted during the training phase to improve the predictions output by the output layer. After the training phase is complete, the artificial neural network enters production phase, to receive as inputs raw data that is not necessarily labelled and to output corresponding predictions.

For illustrative clarity, Figure 2 only displays a few layers and a handful of neurons. In practice, neural networks incorporate significantly more layers, densely populated with a vast number of interconnected neurons, creating a myriad of weights or connections that extend far beyond what is feasibly representable in a single diagram.

In this disclosure, the term "local weight" refers to a connection between two neurons within the local neural network, while a "global weight" analogously refers to a connection within the global neural network. Generally, there's a one-to-one correspondence between local and global weights, implying that the structure of the local neural network (including the number of layers, the number of neurons within each layer, and the function of each neuron) mirrors that of the global neural network. However, it should be noted that this one-to-one correspondence isn't strictly necessary for the operation of the system, as long as the local and global networks share a compatible structure that allows the mapping or transformation of global weights into the local network context.

Reference is now made to Figure 3 which provides a communication scheme between the elements represented on Figure 1, in an exemplary embodiment.

It is considered that, at a given instant, the head-worn device is worn by the wearer, and that relevant data has previously been collected by the input module (110) as a result of interactions with the human-machine interfaces or from the regular functioning of the sensors.

The accumulated data is transferred (302) to the input to the local neural network module (120). The transmitted data is then employed by the local neural network module to generate or refine a personalized model for the wearer. This personalized model is used to control the active function of the device, such as tint changes, optical power adjustments, defocus function modifications, or display settings of AR/VR content, all calibrated according to wearer's usage patterns and preferences.

Concurrently, or periodically, the personalized model is generalized across a larger cohort of wearers.

This generalization process involves a sequence of elementary actions.

First, the weights inferred from the local neural network, encapsulating the correlations between the amassed training data and their respective labels, are transmitted (306) to the global neural network module (130). The global neural network module (130) also receives (304) pertinent data from other sources (150), such as a centralized database storing demographic information about the wearers, environmental data, or information gleaned from other head-worn devices in the network.

A generalized model is formulated by the global neural network module (130). This may involve selecting a subgroup of wearers for the generalization step, and computing an average of the neural network weights from the selected devices to establish a global neural network model. Based on federated learning (FL) principles, this model symbolizes the collective intelligence of the chosen subgroup of wearers.

Subsequently, the global weights from the global model are relayed back (308) to the individual wearable devices. Depending on the specific architecture of the system, these weights could be sent either directly to the head-worn device or initially to a connected smartphone or other computing device.

Upon receipt, these global weights are integrated into the local model, thusly forming an updated local model. This may involve selectively replacing certain local weights while retaining others. Various methods can be utilized for this, such as transmitting only the global weights designated to replace local ones, or delivering a broader set of global weights and employing a filtering mechanism at the local neural network module to select specific weights for replacement. Either way, the revised local model constitutes a personalized adaptation of the generalized model, preserving aspects that are unique to the wearer while integrating insights from the global neural network.

Ultimately, the active function (310) is regulated based on the updated local model. This model directs the active function of the device to deliver a wearer experience tailored to their individual needs and preferences, yet informed by the collective learning of the larger wearer group. This approach allows the device to remain adapted to specific local preferences while dynamically adapting to new situations, leveraging the collective learning amassed from the broader set of wearers.

This general description is intended to present an exemplary implementation of the invention. Variations, modifications, and alternatives may be apparent to those skilled in the art and can be made without departing from the scope of the invention. The specific configuration of components and the manner in which they interact are merely illustrative, and alternative configurations and interactions are within the scope of the appended claims.

In light of the general description, the following specific embodiments serve to further illustrate the proposed invention. These embodiments correspond to distinct use-cases, each presenting a unique approach towards personalized smart eyewear operation. Each embodiment encompasses the same general process already depicted in Figure 3, which involves data collection, model creation, model generalization, and the practical application of the model to the functionality of the head-worn device.

One embodiment revolves around a pair of eyeglasses equipped with optical lenses having an adjustable tint, such as electrochromic eyeglasses.

Initial data collection involves adjusting the tint based on a deterministic model, a model where output is fully determined by the input, leaving no room for random variation. This model could be universally applicable, personalized, or segmented depending on measurements captured in a professional optometry setting.

Tests have been successfully conducted with a model operating primarily based on ambient light sensor (ALS) values provided by a corresponding sensor. Future tests will be performed by further incorporating other input data such as wearer sensitivity to light, measurements performed by an infrared (IR) sensor or by spectrophotometry.

A personalized model is then developed through local computation, based on the wearer's specific interactions. This model integrates inputs like ALS, meteorological conditions, and the wearer's activity. Future refinements might consider additional inputs like indoor/outdoor settings, IR, localization, sun angle, and so on.

The neural network weights are uploaded to a cloud-based environment, and a set of wearers with similar sensitivity levels are chosen to create a generalized model using federated learning strategies. This generalized model is then personalized further by learning certain layers of the neural network based on the wearer's specific data.

Finally, the tint of the eyeglasses is adjusted based on the finalized model, reflecting the predicted preferences of the wearer, which could be influenced by various factors including meteorological conditions, season, GPS localization, ALS, spectrophotometry, IR, etc.

Another embodiment involves eyewear with an adjustable focus feature, designed to aid near vision tasks. The general process similar to the one described above is implemented, but with different parameters specific to near vision assistance. During the initial data collection phase, the E-Focus power is adjusted based on a primary model, personalized or segmented, for example, through near vision activity distance measurement at an ECP shop. The personalized model uses parameters such as a time of flight (ToF) sensor, pitch head angle, and activity status. After model generalization and adjustment of focus based on predicted wearer preferences, this can result in a smart eyewear device that provides superior near vision support.

A distinct embodiment focuses on eyewear with an adjustable defocus feature,, specifically tailored for myopia management in children. The initial model may manipulate the defocus depending on factors like the distance of near vision activities, reading head angles, the age of the wearer, and particular data related to the eyewear frame's fitting.

Importantly, the defocus function isn't consistently active in practical scenarios. It is only invoked when deemed necessary. Additionally, every activation or adjustment of the defocus function necessitates some accommodation time for the wearer's eyes. Consequently, data captured during this period of eye accommodation might not be entirely relevant. Thus, the input module may be configured to transmit to the local neural network module only the data sensed after a sufficient period has elapsed post the activation or modification of the defocus function.

Once the data is transmitted, the creation of the personalized model, followed by its generalization, enables the adjustment of defocus based on the predictions made by this personalized model.

Ultimately, the personalized and generalized model anticipates the wearer's preferences, adjusting the defocus accordingly.

Each of these examples illustrates how the proposed invention allows head-worn devices, particularly eyewear, to adapt to the wearer's needs while also accounting for collective intelligence from a broader wearer set. The actions detailed above can be modified and adapted to best suit the needs of the wearer, leading to a more flexible, efficient, and satisfying user experience.

## Claims

1. A communication system for a head-worn device having an active function, comprising:
- an interface capable of transmitting and receiving signals between a local neural network and a global neural network,
wherein:
- the local neural network enables control of the active function using information gathered by an input module and related to a wearer of the head-worn device or his surrounding environment,
- the transmitted and received signals facilitate participation of the local neural network in a federated learning process with the global neural network.

2. The communication system of claim 1, wherein a signal from the local neural network encapsulates a set of N local weights, N>1, representing a relationship between training data and their respective labels, wherein the training data are information gathered by the input module and the labels correspond to various states of the active function.

3. The communication system of claim 2, wherein a signal from the global neural network encapsulates M global weights, N>M≥1, and each received global weight is utilized to replace a corresponding weight of the set of local weights.

4. The communication system of any one of claims 1 to 3, wherein the federated learning process is a personalized federated learning process defined by:
- the global neural network having access to wearer data indicating that the wearer of the head-worn device belongs to a specific group of wearers, and
- a signal from the global neural network to the local neural network being tailored to the specific group of wearers and, optionally, not comprising any information related to a group identity of the specific group of wearers.

5. A head-worn device having an active function and comprising:
- an input module configured to gather information related to a wearer of the head-worn device or their surrounding environment,
- a local neural network enabling control of the active function using the information gathered by the input module, and
- an interface capable of transmitting and receiving signals between the local neural network and a global neural network,
wherein the transmitted and received signals facilitate participation of the local neural network in a federated learning process with the global neural network.

6. The head-worn device of claim 5, wherein the input module comprises a human-machine interface adapted to receive wearer inputs from the wearer of the head-worn device.

7. The head-worn device of claim 5 or 6, wherein the input module comprises a sensing module adapted to sense:
- environment data, for instance in a list comprising one or more of the following:
luminosity data, distance data and frame boxing data, and/or
- wearer data, for instance in a list comprising one or more of the following: activity data, sensitivity data, laterality data, and posture data.

8. The head-worn device of any one of claims 5 to 7, wherein the head-worn device comprises an optical lens and the active function is an optical function of the optical lens.

9. The head-worn device of claim 8, wherein the optical function is a transmission function, an optical power function or a defocus function.

10. The head-worn device of any one of claims 5 to 7, wherein the head-worn device comprises a screen and the active function is a function of the screen.

11. A method for controlling a head-worn device having an active function, the method comprising:
- gathering information related to a wearer of the head-worn device or their surrounding environment using an input module,
enabling control of the active function using a local neural network and the gathered information, and
- transmitting and receiving signals between the local neural network and a global neural network through an interface, wherein the transmitted and received signals facilitate participation of the local neural network in a federated learning process with the global neural network.

12. A non-transitory computer-readable storage medium having stored thereon a computer program comprising instructions which, when executed by a processor, cause the processor to carry out the method according to claim 11.
